# EUROPÄISCHE PATENTANMELDUNG

(11) **EP 0 582 254 A1**
(43) Veröffentlichungstag der Anmeldung: **09.02.1994**
(21) Anmeldenummer: 93112362.4
(22) Anmeldetag: 02.08.1993
(51) Int. Cl.: B62K 15/00, B62H 5/00, B62M 23/02

(54) **Diebstahlgesicherter Roller mit Elektroantrieb**

(30) Priorität: 04.08.1992 DE 4225721; 01.02.1993 DE 4302719; 16.03.1993 DE 4308296
(71) Anmelder: Schnippering, Hans-Peter, D-58553 Halver (DE)
(72) Erfinder: Schnippering, Hans-Peter, D-58553 Halver (DE)

(57) **Zusammenfassung**

Die Erfindung betrifft einen diebstahlgesicherten Roller mit Elektroantrieb, wobei die Lenksäule (1) unmittelbar über dem Lenkholm (3) durch Beseitigen einer Arretiervorrichtung mit Hilfe eines Gelenkes abgeknickt werden kann und anschließend der obere Teil der Lenksäule (1) auf das Fahrzeugheck (6) gelegt und mit Hilfe einer Schließeinrichtung (7) verriegelt wird. Wird das Fahrzeug auf diese Weise über ein Rohr (8) abgeschlossen, so befindet es sich in einem diebstahlgesicherten Zustand. Das Verriegeln der Lenksäule (1) im Fahrzeugheck (6) schließt zusätzlich aus, daß die schnell auswechselbare Batterie (4), die sich nur in Richtung der verriegelten Lenksäule entnehmen läßt, entfernt wird.
Über einen Ladeadapter der fest am Rohr (8) angebracht ist und der eine formschlüssige Verbindung mit dem abgeschlossenen Fahrzeug eingeht, kann die Batterie des Fahrzeuges aufgeladen werden.

## Beschreibung

Die Anmeldung betrifft einen diebstahlgesicherten Roller gemäß dem Oberbegriff des Anspruchs 1.
Es ist bekannt, daß man zweirädige Fahrzeuge wie Fahrräder und Roller mit einem Elektroantrieb ausrüsten kann, die über eine Batterie versorgt werden. Man erhält somit ein Fahrzeug mit dem kurze Strecken ohne menschlichen Kraftaufwand zurückgelegt werden können. Die Vorteile dieser elektrisch angetriebenen Fahrzeuge gegenüber Kraftfahrzeuge sind im stadtnahen Bereich deutlich erkennbar. Sie sind umweltfreundlich und benötigen aufgrund ihres geringen Eigengewichtes wenig Energie. Außerdem sind ihre benötigten Stellflächen um ein vielfaches kleiner als bei Kraftfahrzeugen.
Ein derartiges Fahrzeug ist beispielsweise aus der DE 3206854 A1 bekannt.
Nachteilig ist jedoch, daß diese relativ teueren Fahrzeuge durch ihr geringes Eigengewicht einfach entwendbar sind. Zusätzliche Abschließvorrichtungen wie z. B. Ketten mit Vorhängeschlösser sind nötig, um das Fahrzeug an einen standortfesten Gegenstand anzuketten. Desweiteren muß die Batterie fest am Fahrzeug montiert sein, damit auch hierfür ein Diebstahl ausgeschlossen ist. Das führt jedoch dazu, daß die Fahrstrecke auf eine Batterieladung beschränkt ist. Ein einfaches Auswechseln der Batterie, wie es bei Akkuschraubern und Funktelefonen bekannt ist, ist hierbei ausgeschlossen. Das Aufladen der Batterie ist nur in Verbindung mit dem Fahrzeug möglich.
Aus der FR 2612867 A1 ist es bekannt, die Windschutzscheibe umklappbar zu gestalten und zur Diebstahlverhinderung am Fahrzeugheck festzuschließen.
Der Erfindung liegt nun die Aufgabe zugrunde, den Diebstahlschutz eines gattungsgemäßen Fahrzeuges und seiner wesentlichen Komponenten zu verbessern.
Diese Aufgabe wird durch die Kennzeichnenden Merkmale des Anspruchs 1 gelöst.
Die mit der Erfindung erzielten Vorteile bestehen insbesondere darin, einen elektrisch angetriebenen Roller alleine durch seine Konstruktion diebstahlsicher zu machen. Durch das Verriegeln der Lenksäule im Heckteil des Fahrzeuges um einen fest verankerten Gegenstand, oder eine speziell für dieses Fahrzeug aufmontierte Rohrkonstruktion, ist ein Diebstahl des Fahrzeuges oder der auswechselbaren Batterie ohne mechanische Zerstörung ausgeschlossen.
Eine vorteilhafte Ausgestaltung der Erfindung ist im Anspruch 2 angegeben. Die Weiterbildung nach Anspruch 2 verhindert, daß ein Ladevorgang im abgeschlossenen Zustand durch Unbefugte unterbrochen werden kann.

Ein Ausführungsbeispiel der Erfindung wird anhand der Figuren 1-5 erläutert. Es zeigen:
- Fig. 1: Roller im Fahrbetrieb.
- Fig. 2: Roller mit umgelegter und abgeschlossener Lenksäule.
- Fig. 3: Roller im diebstahlgesicherten Zustand
- Fig. 4: Aussparung zwischen Lenkholm und Batterieschacht bei umgelegten Lenksäule
- Fig. 5: Ladeadapter

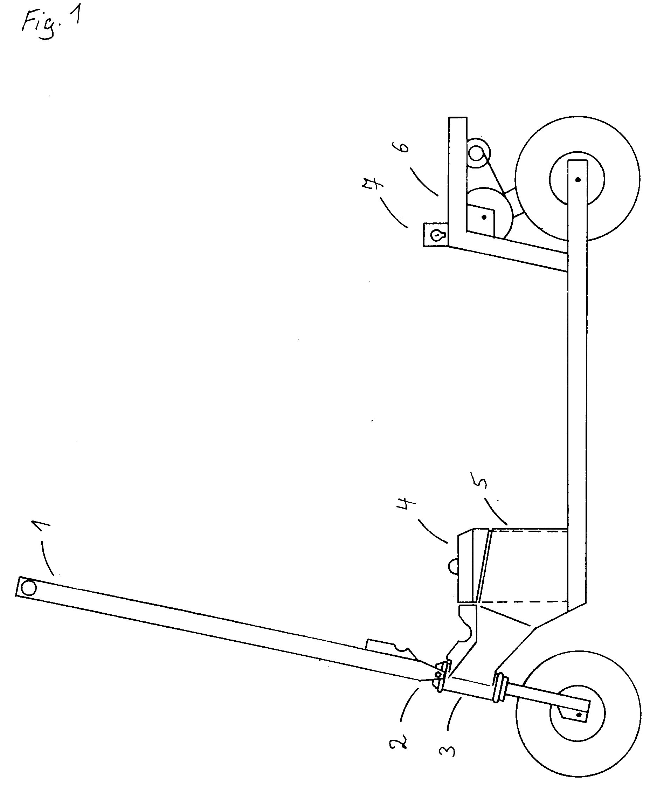

Fig. 1 zeigt das Gesammtfahrzeug in Fahrbetrieb. Die Lenksäule (1), die als Rohr ausgeführt ist und mittels eines Gelenkes (2) oberhalb des Lenkholms (3) schwenkbar gelagert ist, ist aufgerichtet und arretiert. Die Arretierung erfolgt, indem ein stabiler Stift, der sich innerhalb der Lenksäule befindet und in Rohrrichtung verschiebar ist, bis zur Hälfte seiner Länge in aufgerichteter Lenksäulenstellung in den Lenkholm eingeführt wird. Die Batterie (4) befindet sich im Batterieschacht (5). Die elektrische Verbindung der Batterie (4) zum Fahrzeug erfolgt über einen Kontaktstecker, der auf der unteren Seite der Batterie im Batteriegehäuse integriert ist. Das Gegenstück zu diesem Kontaktstecker befindet sich im Batterieschacht (5) des Fahrzeugs. Durch einfaches Herausziehen an einem vorgesehenen Griff, der an der Oberseite des Batteriegehäuses befestigt ist, läßt sich die Batterie (4) vom Fahrzeug entfernen.
Der Vorteil ist, daß eine leere Batterie relativ schnell gegen eine vollgeladene Batterie ausgewechselt werden kann. Ein weiterer Vorteil ist, daß sich bei herausgezogener Batterie das Fahrzeuggewicht erheblich verringert.

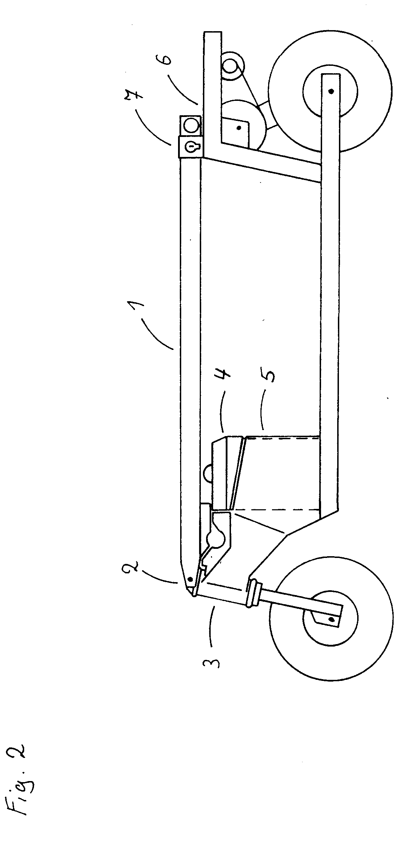

Fig. 2 zeigt das Gesammtfahrzeug im abgeschlossenen Zustand. Die Lenksäule (1) ist mit Hilfe des Gelenkes (2), welches sich unmittelbar über dem Lenkholm (3) befindet, auf das Fahrzeugheck (6) umgelegt. Die umgelegte Lenksäule (1) ist über die Schließeinrichtung (7), die sich an der Haltevorrichtung befindet, die sich wiederum zur Aufnahme der umgelegten Lenksäule (1) am Fahrzeugheck (6) befindet, verriegelt. Die Batterie (4), die sich unmittelbar unter der umgelegten verriegelten Lenksäule (1) befindet, läßt sich nicht mehr aus ihrem Batterieschacht (5) herausnehmen und ist somit diebstahlsicher mit dem Fahrzeug verbunden. Weiterhin ist das Fahrzeug durch die Einschränkung der Lenkung fahruntüchtig geworden.

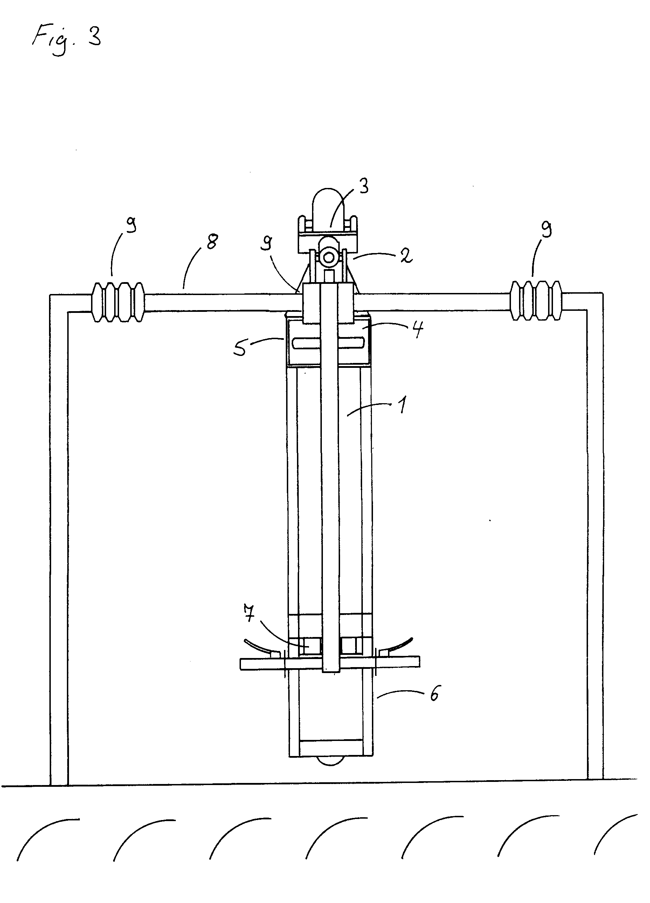

In Fig. 3 befindet sich das Fahrzeug inklusive der Batterie (4) in einem diebstahlgesicherten Zustand. Die Lenksäule (1) ist über ein waagerechtes Rohr (8) umgelegt und am Fahrzeugheck (6) verriegelt worden. Die beiden Enden des Rohres (8) sind fest im Boden montiert. Der so erreichte Zustand bietet einen vollkommen ausreichenden Diebstahlschutz für das Fahrzeug und der dazugehörigen Batterie (4).

Eine weitere Ausgestaltung der Erfindung wird anhand der Figuren 3-5 erkennbar.

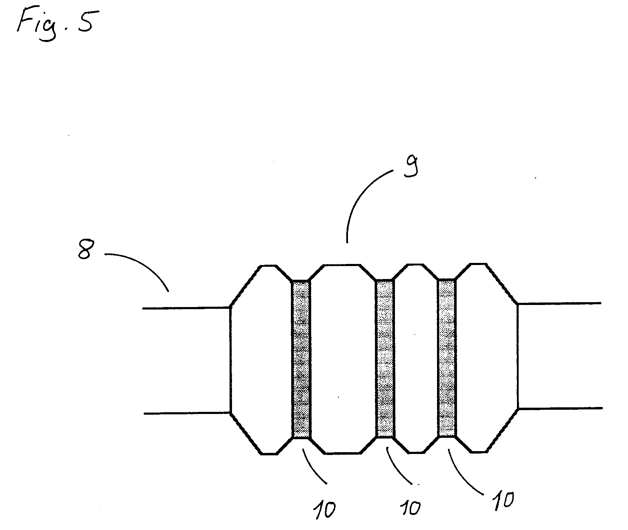

Fig. 5 zeigt einen runden aus Isolierstoff bestehenden Körper (Ladeadapter (9)), der ein unverwechselbares Profil aufweist und mit elektrisch leitenden ringförmigen Kontaktschienen (10) versehen ist.

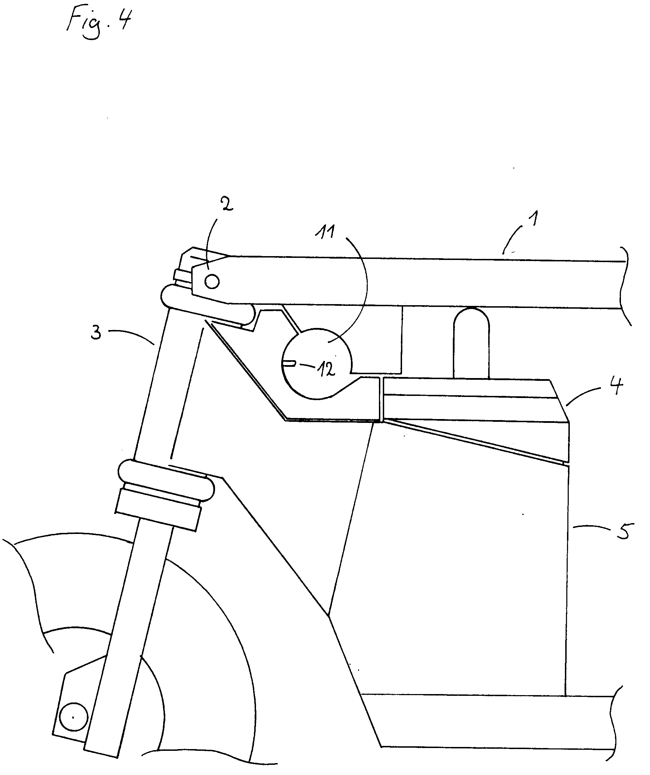

Fig. 4 zeigt eine Aussparung (11) zwischen Lenkholm (3) und Batterieschacht (5) bei umgelegter Lenksäule (1). Die Aussparung (11) ist so geformt, daß sie das Gegenstück zu dem in Fig. 5 gezeigten Ladeadapter (9) bildet und mit diesem bei umgelegter Lenksäule (1) eine formschlüssige Verbindung eingeht. Innerhalb dieser Aussparung (11) befinden sich Schleifkontaktstifte (12), die die elektrische Verbindung zu den ringförmigen Kontaktschienen (10) übernehmen.
In Fig. 3 sind mehrere Ladeadapter (9) in einem bestimmten Abstand voneinander fest an einem waagerechten Rohr (8) befestigt. Durch die formschlüssige Verbindung die der Roller im diebstahlgesicherten Zustand mit einem Ladeadapter (9) eingeht, wird die Bewegungsfreiheit des Fahrzeugs auf dem waagerechten Rohr (8) in der Art eingeschränkt, daß ein Verschieben des Rollers in Rohrrichtung gänzlich ausgeschlossen ist, ein Pendeln um die Rohrachse jedoch möglich bleibt.
Das bietet den Vorteil, daß mehrere Fahrzeug mit einem minimalen Abstand zueinander diebstahlsicher abgestellt werden können, ohne daß es zu Beschädigungen kommen kann.
Gleichzeitig kann die Batterie (4) des Fahrzeugs aufgeladen werden. Die elektrische Verbindung erfolgt über die Schleifkontaktstifte (12) des Fahrzeugs mit den ringförmigen Kontaktschienen (10) des Ladeadapters (9). Die elektrische Verbindung zwischen Ladegerät und Ladeadapter (9) erfolgt durch Ladekabel die sich innerhalb des Rohres (8) befinden, über die das Fahrzeug abgeschlossen ist.

### Beschreibung der Einzelteile der Figuren 1-5:

- 1: Lenksäule
- 2: Gelenk
- 3: Lenkholm
- 4: Batterie
- 5: Batterieschacht
- 6: Fahrzeugheck
- 7: Schließeinrichtung
- 8: Rohr
- 9: Ladeadapter
- 10: Kontaktschiene (ringförmig)
- 11: Aussparung
- 12: Schleifkontaktstifte

## Patentansprüche

1. Diebstahlgesicherter Roller mit Elektroantrieb, bei dem die Lenksäule unmittelbar über dem Lenkholm vermittels eines Gelenkes in Richtung auf das Fahrzeugheck schwenkbar ist, wobei das Gelenk mittels einer Arretiervorrichtung fixiert werden kann, wobei weiterhin am Fahrzeugheck eine Haltevorrichtung zur Aufnahme der umgelegten Lenksäule vorgesehen ist,
dadurch gekennzeichnet, daß die Haltevorrichtung die umgelegte Lenksäule mittels einer Schließeinrichtung verriegelt, wobei die umgelegte Lenksäule eine für den Antrieb des Rollers vorgesehene Batterie diebstahlsicher überdeckt.

2. Diebstahlgesicherter Roller mit Elektroantrieb gemäß Anspruch 1, dadurch gekennzeichnet,
daß die umgelegte Lenksäule auch einen Ladeadapter diebstahlsicher überdeckt.

3. Diebstahlgesicherter Roller mit Elektroantrieb gemäß Anspruch 2, dadurch gekennzeichnet,
daß der Ladeadapter eine Steckvorrichtung ist.

4. Diebstahlgesicherter Roller mit Elektroantrieb gemäß Anspruch 2, dadurch gekennzeichnet,
daß der Ladeadapter ein runder aus Isolierstoff bestehender Körper mit elektrisch leitenden ringförmigen Kontaktschienen ist.

5. Diebstahlgesicherter Roller mit Elektroantrieb gemäß Anspruch 4, dadurch gekennzeichnet,
daß der aus Isolierstoff bestehende Körper bei umgelegter Lenksäule eine formschlüssige Verbindung mit dem Roller bildet.

6. Diebstahlgesicherter Roller mit Elektroantrieb gemäß Anspruch 5, dadurch gekennzeichnet,
daß die formschlüssige Verbindung ein unverwechselbares Profil aufweist.

7. Diebstahlgesicherter Roller mit Elektroantrieb gemäß einem der vorhergehenden Ansprüche, dadurch gekennzeichnet,
daß die Lenksäule über einen fest verankerten, länglichen Gegenstand umgelegt und verschlossen wird.

8. Diebstahlgesicherter Roller mit Elektroantrieb gemäß Anspruch 7, dadurch gekennzeichnet,
daß der fest verankerte, längliche Gegenstand ein Rohr ist, an dem die Ladeadapter befestigt sind.

9. Diebstahlgesicherter Roller mit Elektroantrieb gemäß Anspruch 8, dadurch gekennzeichnet,
daß die Ladekabel im Rohr geführt sind.
